Europäisches Patentamt

European Patent Office

Office européen des brevets

(11) Veröffentlichungsnummer: **0 004 013**
**B2**

(12) **NEUE EUROPÄISCHE PATENTSCHRIFT**

(19)

(12)

(45) Veröffentlichungstag der neuen Patentschrift:
**08.06.88**

(21) Anmeldenummer: **79100565.5**

(22) Anmeldetag: **26.02.79**

(51) Int. Cl.⁴: **A 22 C 11/02**

(54) Anordnung zum Befüllen einer gerafften, schlauchförmigen Hülle.

(30) Priorität: **04.03.78 DE 2809385**

(43) Veröffentlichungstag der Anmeldung:
**19.09.79 Patentblatt 79/19**

(45) Bekanntmachung des Hinweises auf die Patenterteilung:
**10.06.81 Patentblatt 81/23**

(45) Bekanntmachung des Hinweises auf die Entscheidung
über den Einspruch:
**08.06.88 Patentblatt 88/23**

(84) Benannte Vertragsstaaten:
**BE CH DE FR GB IT NL SE**

(56) Entgegenhaltungen:
**AT-B-355 944**
**DE-A-2 721 581**
**DE-B-1 148 905**
**DE-B-1 177 029**
**DE-B-1 186 359**
**DE-C-1 143 413**
**DE-U-1 747 719**
**FR-A-2 330 064**
**FR-A-2 350 789**
**US-A-2 427 202**
**US-A-3 264 679**
**US-A-3 457 588**
**US-A-3 473 190**
**US-A-4 007 761**
**US-A-4 017 941**

(73) Patentinhaber: **HOECHST AKTIENGESELLSCHAFT,
Postfach 80 03 20, D-6230 Frankfurt am Main 80
(DE)**

(72) Erfinder: **Michel, Wolfgang, Am Hohen Stein 24,
D-6200 Wiesbaden (DE)**
Erfinder: **Becker, Reinhold Dr., Am Hohen Stein
18, D-6200 Wiesbaden (DE)**

EP 0 004 013 B2

LIBER, STOCKHOLM 1988

## Beschreibung

Die Erfindung bezieht sich auf eine Anordnung von der im Oberbegriff des Anspruchs 1 genannten Art.

Zur Verpackung von Fleischwaren in Form von Wurstmasse werden bekanntlich geraffte, schlauchförmige Hüllen aus synthetischem, halbsynthetischem oder natürlichem Material verwendet. Diese Hüllen, in der Fachsprache auch als "Raupen" oder "Hohlstäbe" bezeichnet, werden aus langen Schläuchen durch Fälteln und längsaxiales Stauchen hergestellt, wobei die Länge der gerafften Hülle gewöhnlich nur noch 1 bis 3 % der Ursprungslänge beträgt. Im allgemeinen wird zum Abfüllen der Wurstmasse zunächst eine einseitig verschlossene, geraffte schlauchförmige Hülle über das Füllrohr einer Wurstabfüllmaschine geschoben. Die Wurstmasse wird dann unter Druck durch das Füllrohr in die Hülle gepreßt, welche dadurch fortlaufend entfältelt wird. Nach Erreichen einer bestimmten Länge werden zylinderförmige Würste abgebunden und verschlossen.

Der Durchmesser der erhaltenen Würste sollte aus verschiedenen Gründen über die gesamte Länge konstant bleiben. Nur ein gleichmäßiger Durchmesser, dessen Größe z. B. vom Hüllenmaterial oder von der Wurstlänge abhängig ist, gewährleistet einen optimalen Abfüllvorgang. Auch besteht bei Überfüllung die Gefahr des Aufplatzens der Wursthülle, während die Wursthülle bei zu geringer Füllung eine faltige Oberfläche zeigt.

Es wurden bereits verschiedene Vorrichtungen zum Abfüllen von Wurstmasse in geraffte, schlauchförmige Hüllen vorgeschlagen, bei denen spezielle Einrichtungen einen möglichst gleichmäßigen Durchmesser der abgefüllten Packung erzielen sollen.

So ist es üblich, an der Öffnung des Füllrohres der Abfüllmaschine eine Kalibriervorrichtung anzubringen, welche mit ihrer Oberfläche auf die Innenwand der zu füllenden Hülle angepreßt wird und diese aufweitet. Durch diesen Anpreßdruck treten zwischen der Kalibriervorrichtung und der Innenwand der Hülle Reibungskräfte auf, welche den Abzug der Hülle verzögern. Die aus der US-PS-3 457 588 bekannten Anordnung ermöglicht beispielsweise eine steuerbare Aufweitung der Hülle beim Füllen. Als weitere Kalibriervorrichtung werden beispielsweise am Öffnungsrand des Füllrohrs angebrachte Finger beschrieben (US-PS-3 264 679), die durch Einschlitzen der Füllrohröffnung gebildet sind. Sie drücken auf die Innenwand der Hülle und weiten sie auf. Es bildet sich ein Reibungswiderstand, wenn die Hülle während des Füllens über diese Finger gezogen wird. Diese Vorrichtung zeigt jedoch den Nachteil, daß der Reibungswiderstand während des Füllvorgangs nicht variiert werden kann. Ferner besteht Gefahr, daß die Hülle an den aufspreizenden Fingern verletzt wird.

Es wurde auch schon vorgeschlagen, die geraffte, schlauchförmige Hülle zusammen mit einer Kalibrierscheibe zu verpacken und diese Anordnung vor dem Füllvorgang mit dem Füllrohr zu verbinden (US-PS-4 007 761). Die Kalibrierscheibe wird von einem ungerafften Teil der Hülle eingeschlossen, wobei der Außenumfang der Kalibrierscheibe größer sein soll, als der Innenumfang der ungerafften Hülle. Beim Füllvorgang wird die Hülle über die Kalibrierscheibe gezogen und aufgeweitet. Die Kalibrierscheibe muß aus unelastischem Material bestehen, so daß ihr Durchmesser durch die Andruckkraft der Hülle gegen den Umfang der Kalibrierscheibe nicht verändert werden kann.

Diese unelastische Kalibrierscheibe zeigt somit den Nachteil, daß bei fertigungstechnisch nicht zu vermeidenden Schwankungen des Hüllenumfangs keine optimale Füllung der Hülle erreicht wird. Bei zu kleinem Kaliber der Hülle besteht die Gefahr, daß sie durch die Kalibrierscheibe beschädigt wird oder abreißt; zumindest tritt eine besonders starke Reibung zwischen Hülle und Kalibrierscheibe auf, so daß die Hülle mit Wurstmasse überfüllt und beim Brühen dem auftretenden hohen Druck nicht standhält und platzt. Überschreitet der Hüllendurchmesser andererseits eine optimale Größe so rutscht die Hülle zu schnell über die Kalibrierscheibe und wird somit nicht ausreichend mit Wurstmasse gefüllt.

Ausgehend von dem aufgezeigten Stand der Technik besteht die Aufgabe der vorliegenden Erfindung darin, eine Anordnung vorzuschlagen, die die Nachteile der bekannten Kalibriervorrichtungen nicht aufweist und die eine steuerbare Aufweitung der entrafften, schlauchförmigen Hülle beim Füllen mit Wurstmasse gestattet.

Diese Aufgabe wird gelöst durch eine Anordnung mit den in Anspruch 1 aufgezeigten Merkmalen. Die Unteransprüche geben bevorzugte Ausführungen der Anordnung wieder.

Die schlauchförmige Hülle besteht aus einem der üblichen zur Herstellung von Wursthüllen verwendeten Materialien, z. B. aus Cellulosehydrat, Kollagen oder Kunststoff.

Der wesentliche Teil der erfindungsgemäßen Anordnung ist die Kalibriervorrichtung, welche die entraffte, schlauchförmige Hülle vor dem Befüllen mit Wurstmasse aufweitet und die Abziehgeschwindigkeit der Hülle steuert. Sie besteht aus einem hohlen Kalibrierrohr mit aufgeweitetem Rohrende und einem ringförmigen Kalibrierteil; beide Elemente werden mit ihrer Bohrung auf das Füllrohr der Füllmaschine aufgeschoben und gegeneinander gepreßt.

Die Länge des Kalibrierrohres ist beispielsweise so bemessen, daß sich die geraffte, schlauchförmige Hülle in ihrer gesamten Länge auf dem Kalibrierrohr befindet. An dem nicht aufgeweiteten Kalibrierrohrende ist die Hülle z. B. durch einen Anschlagkörper fixiert, welcher mit dem Kalibrierrohr verwunden ist. Der Anschlagkörper ist beispielsweise eine Hülse oder ein Ring, welcher mit seiner Bohrung auf das nicht aufgeweitete Ende des Kalibrierrohres aufgeschoben und befestigt ist, z. B durch Noppen auf der Außenseite des Kalibrierrohres oder durch Kleben. Das Kalibrierrohr in dieser Ausführungsform hat somit die zusätzliche Funktion einer Stützhülle für die schlauchförmige Hülle.

Sofern vor dem Füllvorgang eine gründliche Wässerung der Hülle erforderlich ist, was in erster Linie vom Hüllenmaterial abhängt, wird vorzugsweise die auf dem Kalibrierrohr fixierte Hülle gewässert. Um das rasche Eindringen von Wasser auch auf die Innenseite der schlauchförmigen Hülle zu ermöglichen, werden gegebenenfalls Durchbrechungen im Kalibrierrohr, z. B. in Form von runden Ausstanzungen, vorgesehen.

Das Kalibrierrohr mit der daran fixierten Hülle wird auf das Füllrohr einer üblichen Vorrichtung zum Abfüllen von Wurstmasse in schlauchförmigen Hüllen aufgeschoben.

In einer weiteren Ausführungsform der Anordnung ist die Länge des Kalibrierrohres so kurz bemessen, daß es die Innenwand der schlauchförmigen Hülle nicht zu stützen vermag. Bei dieser Ausführungsform beginnt die Aufweitung des Kalibrierrohres am einen Ende des Kalibrierrohres und erreicht am anderen Ende, das der Füllrohröffnung benachbart ist, seinen maximalen Umfang. In diesem Fall wird zunächst die schlauchförmige Hülle auf das Füllrohr aufgezogen. Danach wird das Kalibrierrohr mit der nicht aufgeweiteten Öffnung auf das Füllrohr aufgeschoben. Anschließend wird die entraffte, schlauchförmige Hülle über die aufgeweitete Kalibrieröffnung gezogen. Diese Anordnung zeigt den Vorteil, daß das Kalibrierrohr erst unmittelbar vor dem Abfüllvorgang eingesetzt werden muß.

Das der Öffnung des Füllrohres benachbarte Ende des Kalibrierrohres zeigt vergrößerten Umfang, vorzugsweise ist es konisch aufgeweitet. In besonders bevorzugter Ausführungsform weist der aufgeweitete Umfang einen zumindest annähernd senkrecht nach außen wegragenden Flanschrand auf, an den sich in Richtung zum Kalibrierrohrende eine z. B. zylinderförmige Wand anschließt. Vorzugsweise ist diese Wand - ausgehend vom Flanschrand - konisch erweitert. Vorzugsweise ist der maximale Umfang der aufgeweiteten Kalibrierrohröffnung kleiner/gleich dem Umfang der ungerafften schlauchförmigen Hülle im Betriebszustand.

Das ringförmige Kalibrierteil, vorzugsweise eine im Querschnitt kreisförmige Scheibe mit einer zentralen Bohrung und abgerundeten Umfangskanten, wird nun auf das Füllrohr aufgeschoben, gegen das erweiterte Kalibrierrohrende gepreßt und in diesem Zustand am Füllrohr befestigt. Der Umfang des ringförmigen Kalibrierteils ist kleiner als der maximale Umfang der aufgeweiteten Öffnung des Kalibrierrohres, so daß das ringförmige Kalibrierteil mit der Innenfläche des aufgeweiteten Kalibrierrohrteiles in Kontakt tritt.

Mit zunehmendem Anpreßdruck wird der Umfang des aufgeweiteten Kalibrierrohrteiles vergrößert. Voraussetzung hierzu ist allerdings, daß das Kalibrierrohr zumindest in diesem Bereich aus ausreichend flexiblem, d. h. elastischem oder dehnbarem Material, wie z. B. aus Gummi, thermogeformtem Polyvinylchlorid oder Polystyrol, besteht.

Auch eine wellenartige Profilierung des aufgeweiteten Kalibrierrohrendes ermöglichen eine weitere Aufweitung des Umfanges durch Einpressen des ringförmigen Kalibrierteiles und Straffen der gewellten Oberfläche.

In bevorzugter Ausführungsform zeigt das oben beschriebene zylinderförmige, vorzugsweise sich konisch erweiternde Ende des Kalibrierrohres sich parallel gleichabständig zueinander erstreckende Erhebungen und/oder Vertiefungen, welche parallel zur Achse des Kalibrierrohres verlaufen und in ihrer Gesamtheit eine wellenartige Profilierung seines konisch erweiterten Endstücks ergeben. Beim Anpressen des ringförmigen Kalibrierteils wird die Profilierung in Umfangsrichtung des konisch erweiterten Endstücks gestreckt und somit der Umfang des genannten Kalibrierrohrteils vergrößert. Das gegenseitige Anpressen des Kalibrierrohres und des ringförmigen Kalibrierteiles erfolgt durch Befestigen des Kalibrierrohres und des ringförmigen Kalibrierteiles am Füllrohr, z. B. mittels eines Bajonettverschlusses oder durch Aufschrauben dieser Elemente auf Gewinde am Füllrohr welche eine feine Einstellung des Anpreßdruckes und damit der Aufweitung der Hülle gestatten oder durch federnde Elemente, welche die beiden Kalibrierteile gegeneinander drücken.

Bei allen Ausführungsformen ist es ausreichend, wenn nur das ringförmige Kalibrierteil am Füllrohr befestigt ist. In diesem Fall wird das Kalibrierrohr durch die von der abgezogenen Hülle ausgeübte Zugkraft gegen das ringförmige Kalibrierteil gedrückt.

Die schlauchförmige Hülle wird über das aufgeweitete Ende des Kalibrierrohres, über das ringförmige Kalibrierteil und die Öffnung des Füllrohres gezogen, wobei sie entfältelt wird. Die Öffnung der schlauchförmigen Hülle wird nun in üblicher Weise verschlossen, z. B. mit einer Klippvorrichtung, und der Abfüllvorgang kann beginnen. Durch den Druck, mit dem die Wurstmasse durch das Füllrohr in die schlauchförmige Hülle gepreßt wird, wird die Hülle fortlaufend über das aufgeweitete Ende des Kalibrierrohres gezogen. Nach den genannten Anordnungselementen durchläuft die schlauchförmige Hülle übliche Maschinenelemente, z. B. zusätzlich bremsende Elemente, die den Hüllenkaliber verengen sowie eine Abbinde- und Schneidstation.

Die Anordnung gemäß der Erfindung wird anhand der in den Figuren gezeigten Ausführungsbeispiele erläutert, ohne sich hierauf zu beschränken

Fig. 1 zeigt eine Anordnung seitlich gesehen im Schnitt;

Fig. 2 zeigt die Anordnung der Fig. 1 mit zusätzlicher Anpreßfeder;

Fig. 3 zeigt eine Ausführungsform des Kalibrierrohres mit erweiterter Öffnung in perspektivischer Ansicht.

Bei den gezeigten Systemen werden für funktionsgleiche Bauelemente gleiche Bezugsziffern verwendet.

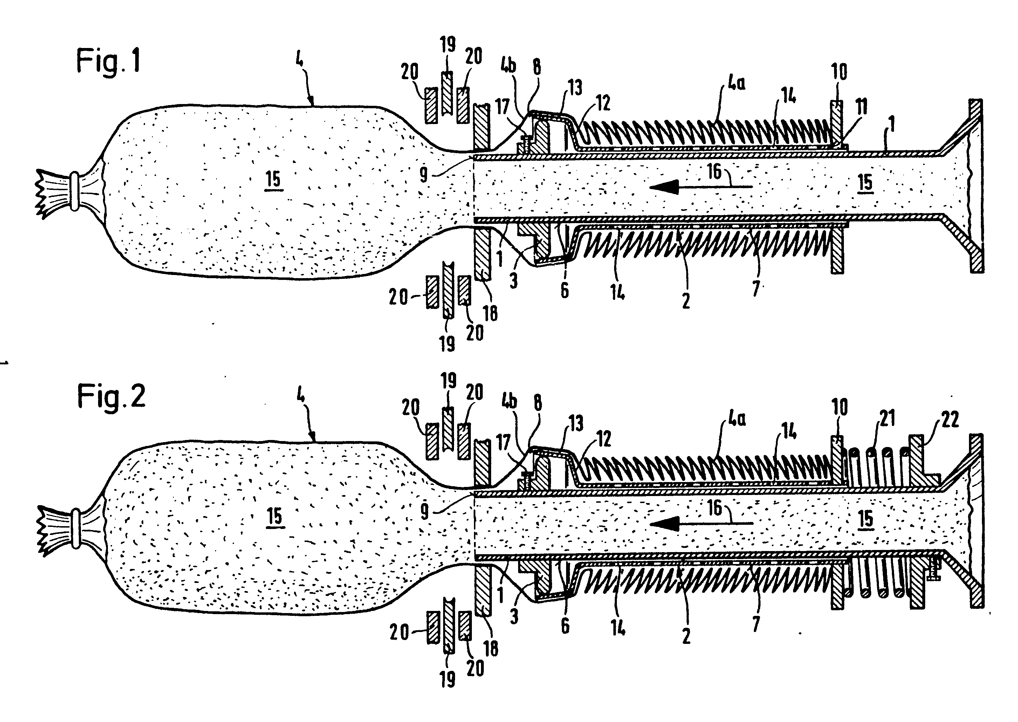

In Fig. 1 ist ein Füllrohr 1 einer Wurstabfüllmaschine dargestellt, auf dessen Außenfläche 6 sich das Kalibrierrohr 2 und das ringförmige Kalibrierteil 3 befinden.

Das Kalibrierrohr 2 umgibt die Außenfläche 6 des Füllrohres 1 und trägt mit seiner Außenfläche 7 die geraffte, schlauchförmige Hülle 4a in ihrer gesamten Länge. Das Kalibrierrohrende 8, welches der Füllrohröffnung 9 benachbart ist, weist einen vergrößerten Umfang auf, wobei ein entraffter Teil 4b der schlauchförmigen Hülle 4 über das vergrößerte Kalibrierrohrende 8 gezogen ist. Das ringförmige Kalibrierteil 3 in Form einer im Querschnitt kreisförmigen Scheibe mit abgerundeten Umfangskanten zeigt einen Umfang, der kleiner ist als der maximale Umfang des aufgeweiteten Kalibrierrohrendes 8.

Die geraffte, schlauchförmige Hülle 4a ist durch einen ringförmigen Anschlagkörper 10 fixiert, welcher mit Nasen in Vertiefungen 11 am Kalibrierrohr 2 eingerastet ist.

Der vergrößerte Umfang des Kalibrierrohres 2 weist einen nach außen wegragenden Flanschrand 12 auf, an den sich in Richtung zum Kalibrierrohrende 8 eine konisch erweiterte Wand 13 anschließt. Durchbrechungen 14 im Kalibrierrohr 2 erleichtern die vorhergehende Wässerung der Hülle 4.

Die Wurstmasse 15 wird in Richtung des Pfeils 16 in die schlauchförmige Hülle 4 gepreßt, welche über das aufgeweitete Kalibrierrohrende 8 abgezogen wird. Hierbei wird das Kalibrierrohr 2 gegen das Füllrohr 1 mit einer Schraube 17 befestigte, ringförmige Kalibrierteil 3 gedrückt. Die entraffte schlauchförmige Hülle 4b durchläuft weitere bremsende Elemente 18 sowie die schematisch eingezeichnete Schneidstation 19 und Abbindestation 20.

Verwendet man beispielsweise eine schlauchförmige Hülle aus regenerierter Cellulose mit Papiereinlage und weitet deren Durchmesser von 108 mm auf 114 mm auf, dann erhält man Würste mit einem Füllkaliber von 117 bis 118 mm.

In Fig. 2 ist eine zusätzliche Feder 21 mit einem ein- und feststellbaren Widerlager 22 vorgesehen, welche das Kalibrierrohr 2 gegen die Kalibrierscheibe 3 drückt.

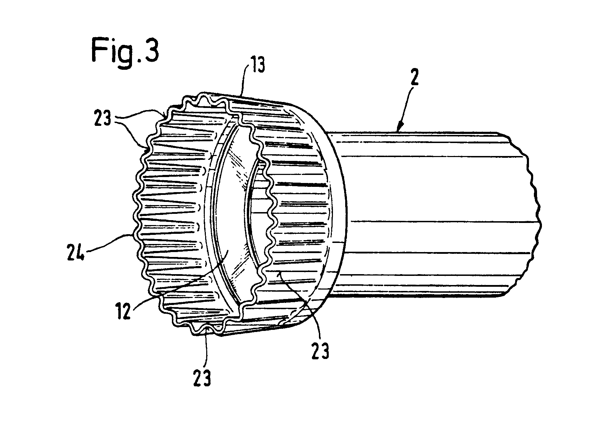

Das in Fig. 3 gezeigte Kalibrierrohr 2 mit Flanschrand 12 besitzt auf der konisch erweiterten Wand 13 parallel zueinander sich erstreckende Vertiefungen 23, welche parallel zur Achse des Kalibrierrohres 2 eine wellenartige Profilierung ergeben. Die Vertiefungen 23 verbreitern sich keilförmig in Richtung auf den Öffnungsrand 24 des Kalibrierrohres 2.

Mit dem variablen Umfang des Kalibrierrohres werden entsprechend variable Reibungskräfte zwischen dem Kalibrierrohr und der Innenwand der entrafften, schlauchförmigen Hülle erzeugt, welche dem von der eingepreßten Wurstmasse ausgehenden Druck entgegenwirken und das Abziehen der Wursthülle abbremsen. Durch die Steuerung des aufgeweiteten Umfangs des Kalibrierrohres läßt sich auf einfache Weise der Umfang der abgefüllten Packungen regeln.

Außerdem besteht bei zu kleinem Kaliber der schlauchförmigen Hülle aufgrund von fertigungsbedingten Abweichungen kaum Gefahr, daß die Hülle am aufgeweiteten Kalibrierrohrende beschädigt wird, da der Öffnungsrand des Kalibrierrohres flexibel ist und deshalb variierbaren Umfang zeigt.

## Patentansprüche

1. Anordnung zum Befüllen einer gerafften, schlauchförmigen Hülle mit der aus dem Füllrohr (1) einer Füllvorrichtung unter Druck austretenden Wurstmasse (15), bestehend aus einer den entrafften Hüllenteil (4b) aufweitenden, an der Innenwand der Hülle anliegenden und das Füllrohr (1) umgebenden aufweitbaren Kalibriervorrichtung, die ein hohles Kalibrierrohr (2) aufweist, welches die Außenfläche (6) des Füllrohres (1) umgibt und mit seiner Außenfläche (7) an die Innenwand der schlauchförmigen Hülle (4) angrenzt, wobei zumindest das Kalibrierrohrende (8), welches der Füllrohröffnung (9) benachbart ist, einen vergrößerten Umfang aufweist, wobei ferner ein entraffter Teil (4b) der schlauchförmigen Hülle (4) über das vergrößerte Kalibrierrohrende (8) gezogen ist, und die aus einem zweiten, ringförmigen Kalibrierteil (3) besteht, welches in Kontakt mit der Innenfläche des aufgeweiteten Teils (8) des Kalibrierrohres (2) tritt und unter variablem Anpreßdruck den Umfang des aufgeweiteten Teils (8) des Kalibrierrohres (2) verändert, dadurch gekennzeichnet, daß das Kalibrierrohrende (8), welches der Füllrohröffnung (9) benachbart ist, eine geschlossene Umfangsfläche (13) aufweist und aus elastisch verformbarem Material besteht, daß das Kalibrierrohr (2) verschiebbar auf dem Füllrohr (1) angeordnet ist und daß sich das zweite, ringförmige Kalibrierteil (3) auf der Außenfläche (6) des Füllrohrs (1) befindet und damit verbunden ist.

2. Anordnung nach Anspruch 1, dadurch gekennzeichnet, daß das vergrößerte Kalibrierrohrende (8) einen maximalen Umfang aufweist, der kleiner oder gleich dem Umfang der ungerafften schlauchförmigen Hülle (4b) im Betriebszustand ist.

3. Anordnung nach Anspruch 1 oder 2, dadurch gekennzeichnet, daß sich das der Füllrohröffnung (9) benachbarte Teil des Kalibrierrohres (2) konisch erweitert.

4. Anordnung nach einem der Ansprüche 1 bis 2, dadurch gekennzeichnet, daß der erweiterte Teil des Kalibrierrohres (2) einen nach außen wegragenden Flanschrand (12) aufweist, an den sich in Richtung zum Kalibrierrohrende (8) eine zylinderförmige Wand anschließt.

5. Anordnung nach einem der Ansprüche 1 bis 2, dadurch gekennzeichnet, daß der erweiterte Teil des Kalibrierrohres (2) einen nach außen wegragenden Flanschrand (12) aufweist, an den sich konisch erweiternde Wand (13) anschließt.

6. Anordnung nach Anspruch 4 oder 5, dadurch gekennzeichnet, daß die sich an den Flanschrand (12) anschließende Wand (13) von der Nähe des Flanschrandes (12) ausgehende, bis zur Öffnung (24) des Kalibrierrohres (2) sich erstreckende, längsaxial verlaufende Erhebungen und/oder Vertiefungen (23) aufweist.

7. Anordnung nach einem der Ansprüche 1 bis 6, dadurch gekennzeichnet, daß das ringförmige Kalibrierteil (3) aus einer im Querschnitt ringförmigen Scheibe besteht, deren kreisförmiger Umfang kleiner ist als der maximale Umfang des aufgeweiteten Kalibrierrohrendes (8).

8. Anordnung nach einem der Ansprüche 1 bis 7, dadurch gekennzeichnet, daß das Kalibrierrohr (2) die geraffte, schlauchförmige Hülle (4a) in ihrer gesamten Länge trägt, und daß die schlauchförmige Hülle (4) an dem der Füllrohröffnung (9) abgewendeten Kalibrierrohrende fixiert ist.

9. Anordnung nach Anspruch 8, dadurch gekennzeichnet, daß die schlauchförmige Hülle (4) an ihrem der Füllrohröffnung (9) abgewendeten Ende durch einen Anschlagkörper (10) fixiert ist, welcher am Kalibrierrohr (2) befestigt ist.

10. Anordnung nach Anspruch 9, dadurch gekennzeichnet, daß die schlauchförmige Hülle (4) durch einen Ring (10) fixiert ist, welcher mit Nasen in Vertiefungen (11) an dem der Füllrohröffnung (9) abgewendeten Ende des Kalibrierrohres (2) eingerastet ist.

11. Anordnung nach einem der Ansprüche 8 bis 10, dadurch gekennzeichnet, daß das Kalibrierrohr (2) Durchbrechungen (14) aufweist.

12. Anordnung nach einem der Ansprüche 8 bis 11, dadurch gekennzeichnet, daß das Kalibrierrohr (2) mit einem einstellbaren Element (21) gegen das ringförmige Kalibrierteil (3) gepreßt wird.

**Claims**

1. Device for filling a shirred tubular casing with a sausage composition (15) flowing under pressure from the stuffing horn (1) of a stuffing machine, comprising an expandable calibrating means which is in contact with the inside wall of the casing and surrounds the stuffing horn (1) and which widens a deshirred portion (4b) of the casing, the calibrating means comprising a hollow calibrating pipe (2) which surrounds the outside surface (6) of the stuffing horn (1) and adjoins the inside wall of the tubular casing (4) with its outside surface (7), at least the end (8) of the calibrating pipe (2) adjacent to the opening (9) of the stuffing horn (1) having an enlarged circumference and a deshirred portion (4b) of the tubular casing (4) being drawn over the enlarged end (8) of the calibrating pipe (2), the calibrating means further comprising a second, annular calibrating element (3) which contacts the inside surface of the enlarged portion (8) of the calibrating pipe (2) and changes the circumference of the enlarged portion (8) of the calibrating pipe (2) under variable contact pressure, characterized in that the end (8) of the calibrating pipe (2) which is adjacent to the opening (9) of the stuffing horn (1) has a compact circumferential surface (13) and is made of a resilient material, that the calibrating pipe (2) is moveably arranged on the stuffing horn (1) and that the second, annular calibrating element (3) is disposed on the outside surface (6) of the stuffing horn (1) and is fastened thereto.

2. Device according to claim 1, characterized in that the enlarged end (8) of the calibrating pipe (2) has a maximum circumference which is smaller than or equal to the circumference of the unshirred tubular casing (4b) ready for use.

3. Device according to claim 1 or claim 2, characterized in that the portion of the calibrating pipe (2) adjacent to the opening (9) of the stuffing horn (1) is flared out.

4. Device according to claim 1 or claim 2, characterized in that the enlarged portion of the calibrating pipe (2) comprises an outwards projecting flange (12) and, adjacent thereto, in the direction of the end (8) of the calibrating pipe (2), a cylindrical wall (13).

5. Device according to claim 1 or claim 2, characterized in that the enlarged portion of the calibrating pipe (2) comprises an outwards projecting flange (12) and, adjacent thereto, in the direction of the end (8) of the calibrating pipe (2) a flared-out wall (13).

6. Device according to claim 4 or claim 5, characterized in that the wall (13) adjacent to the flange (12) comprises longitudinal elevations and/or depressions (23) which extend from the vicinity of the flange (12) to the opening (24) of the calibrating pipe (2).

7. Device according to any one of claims 1 to 6, characterized in that the annular calibrating element (3) consists of a disc with an annular cross-section whose circular circumference is smaller than the maximum circumference of the enlarged end (8) of the calibrating pipe (2).

8. Device according to any one of claims 1 to 7, characterized in that the calibrating pipe (2) carries the entire length of the shirred tubular casing (4a) and that the tubular casing (4) is fixed to the end of the calibrating pipe (2) away from the opening (9) of the stuffing horn (1).

9. Device according to claim 8, characterized in that the tubular casing (4) is fixed, at its end away from the opening (9) of the stuffing horn (1), by an abutment (10) which is attached to the calibrating pipe (2).

10. Device according to claim 9, characterized in that the casing (4) is fixed by a ring (10) provided with projections which engage depressions (11) in the end of the calibrating pipe (2) away from the opening (9) of the stuffing horn (1).

11. Device according to any one of claims 8 to 10, characterized in that the calibrating pipe (2) is provided with perforations.

12. Device according to any one of claims 8 to 11, characterized in that the calibrating pipe (2) is urged against the annular calibrating element (3) by means of an adjustable element (21).


**Revendications**

1. Dispositif pour le bourrage d'une gaine souple avec de la chair à saucisse (15) sortant sous pression d'un dispositif de remplissage, qui comprend un dispositif de calibrage élargissable qui s'applique contre la paroi intérieure de la gaine en enrobant le tube de remplissage (1), en vue d'assurer l'extension de la partie déplissée (4b) de la gaine, et qui se compose, d'une part, d'un tube de calibrage creux (2) qui enrobe la paroi extérieure (6) du tube de remplissage, et qui, par sa paroi extérieure (7), se trouve en contact avec la paroi intérieure de la gaine (4), afin que l'extrémité (8) au moins du tube de calibrage, qui confine à l'ouverture (9) du tube de remplissage, présente une circonférence évasée sur laquelle on fait passer la partie déplissée (4b) de la gaine (4), et, d'autre part, d'un deuxième élément de calibrage annulaire (3) qui entre en contact avec la paroi intérieure de l'extrémité évasée (8) du tube de calibrage (2) et qui, sous l'effet d'une pression d'appui variable, provoque la variation du diamètre de cette extrémité évasée (8), ce dispositif étant caractérisé en ce que l'extrémité (8) du tube de calibrage proche de l'ouverture (9) du tube de remplissage comporte une paroi circulaire (13) réalisée en un matériau élastique et déformable, et en ce que le tube de calibrage (2) coulisse sur le tube de remplissage (1), alors que le deuxième élément de calibrage circulaire (3) est relié fixement à la paroi extérieure (6) du tube de remplissage (1).

2. Dispositif selon la revendication 1, caractérisé en ce que la circonférence maximale de l'extrémité élargie (8) du tube de calibrage est inférieure, ou au plus égale, à la circonférence de la partie déplissée (4b) de la gaine souple en position de travail.

3. Dispositif selon l'une des revendications 1 et 2, caractérisé en ce que l'extrémité du tube de calibrage (2) proche de l'ouverture (9) du tube de remplissage présente un évasement conique.

4. Dispositif selon l'une des revendications 1 et 2, caractérisé en ce que la partie évasée du tube de calibrage (2) se compose d'une aile (12) qui s'étend vers l'extérieur, et qui se prolonge par une paroi cylindrique dirigée vers l'extrémité (8) de ce tube de calibrage.

5. Dispositif selon l'une des revendications 1 et 2, caractérisé en ce que la partie évasée du tube de calibrage (2) se compose d'une aile (12) qui s'étend vers l'extérieur et qui se prolonge par une paroi de forme conique (13), dirigée vers l'extrémité (8) de ce tube de calibrage.

6. Dispositif selon l'une des revendications 4 et 5, caractérisé en ce que la paroi (13) qui prolonge l'aile (12) et qui s'étend du bord de l'aile (12) à l'ouverture (24) du tube de calibrage (2) comporte des bosses et des cavités (23) longitudinales s'étendant dans le sens axial.

7. Dispositif selon l'une quelconque des revendications 1 à 6, caractérisé en ce que l'élément de calibrage annulaire (3) présente, vu en coupe transversale, la forme d'un disque dont la circonférence la plus petite est inférieure à la circonférence la plus grande de la partie évasée de l'extrémité (8) du tube de calibrage.

8. Dispositif selon l'une quelconque des revendications 1 à 7, caractérisé en ce que le tube de calibrage (2) porte toute la totalité de la gaine souple plissée (4a), et en ce que la gaine souple (4) est maintenue sur l'extrémité du tube de calibrage (2) opposée à l'ouverture de sortie (9) du tube de remplissage.

9. Dispositif selon la revendication 8, caractérisé en ce que la gaine souple (4) est maintenue sur l'extrémité du tube de calibrage (2) opposée à l'ouverture de sortie (9) à l'aide d'une butée (10) fixée sur ce même tube de calibrage (2).

10. Dispositif selon la revendication 9, caractérisé en ce que la gaine souple (4) est maintenue par une bague (10) équipée d'ergots qui sont en prise dans des cavités (11) pratiquées sur l'extrémité du tube de calibrage (2) opposée à l'ouverture de sortie (9) du tube de remplissage.

11. Dispositif selon l'une quelconque des revendications 8 à 10, caractérisé en ce que le tube de calibrage (2) comporte des perforations (14).

12. Dispositif selon l'une quelconque des revendications 8 à 11, caractérisé en ce que le tube de calibrage (2) est poussé par un dispositif réglable (21) contre l'élément de calibrage annulaire (3).

Fig.1

Fig.2

Fig.3